Europäisches Patentamt

European Patent Office

Office européen des brevets

(11) Veröffentlichungsnummer : **0 440 614 B1**

(12) **EUROPÄISCHE PATENTSCHRIFT**

(45) Veröffentlichungstag der Patentschrift :
13.05.92 Patentblatt 92/20

(51) Int. Cl.⁵ : **B62D 5/07**

(21) Anmeldenummer : **89901963.2**

(22) Anmeldetag : **24.11.88**

(86) Internationale Anmeldenummer :
**PCT/EP88/01064**

(87) Internationale Veröffentlichungsnummer :
**WO 89/05256 15.06.89 Gazette 89/13**

(54) **STEUEREINRICHTUNG FÜR ZWEI ÜBER JE EINEN STROMZWEIG DURCH EINE HOCHDRUCKPUMPE VERSORGTE HYDRAULISCHE STELLVORRICHTUNGEN.**

(30) Priorität : **01.12.87 DE 3740661**

(43) Veröffentlichungstag der Anmeldung :
**14.08.91 Patentblatt 91/33**

(45) Bekanntmachung des Hinweises auf die
Patenterteilung :
**13.05.92 Patentblatt 92/20**

(84) Benannte Vertragsstaaten :
**DE FR GB IT**

(56) Entgegenhaltungen :
**DE-A- 2 913 484**
**DE-A- 3 603 988**
**DE-C- 3 540 236**
**US-A- 4 664 210**

(73) Patentinhaber : **ZF FRIEDRICHSHAFEN**
**Aktiengesellschaft**
**Löwentaler Strasse 100 Postfach 2520**
**W-7990 Friedrichshafen 1 (DE)**

(72) Erfinder : **TISCHER, Werner**
**Im Brühl 33**
**W-7072 Heubach-Lautern (DE)**

EP 0 440 614 B1

## Beschreibung

Die Erfindung betrifft eine Steuereinrichtung für zwei über je einen Stromzweig durch eine Hochdruckpumpe versorgte hydraulische Stellvorrichtungen nach dem Oberbegriff von Anspruch 1.

Derartige Steuereinrichtungen sind bereits aus der DE-OS 35 40 236 und der DE-OS 36 03 988 bekannt. Hier teilt ein Stromteilventil den von einer Hochdruckpumpe erzeugten Ölstrom in zwei Stromzweige auf. Der eine Stromzweig führt über ein Lenkventil einer ersten Stellvorrichtung (Lenkmotor) einen Arbeitsstrom zu, und der andere Stromzweig versorgt eine zweite Stellvorrichtung (z. B. Hubhydraulik) mit einem Reststrom. Das Stromteilventil ist so ausgeführt, daß dieses der für die Fahrsicherheit maßgebenden Lenkung im Bedarfsfall bevorzugt Drucköl zuleitet. Hinter einer Steuerkante des Stromteilventils für den Arbeitsstrom der Lenkung liegt eine meßblende. Über diese Meßblende fließt dem Lenkventil in seiner Neutralstellung ständig ein kleiner Pilotstrom zu. Dieser Pilotstrom dient zum Anregeln eines Druckes im Lenkmotor und zum Temperieren des Lenkventils, unabhängig von der Belastung des Lenkmotors. Die letztere Maßnahme vermeidet, daß das Lenkventil infolge von Wärmedehnung klemmt. In der erstgenannten DE-OS 35 40 236 verwendet man zur Versorgung der Steuereinrichtung eine Konstantpumpe, die immer mit maximalem Druck und maximaler Menge fördert. In der zweitgenannten DE-OS 36 03 988 sieht man dagegen eine Verstellpumpe vor, die ihren augenblicklichen Förderhub nach den Erfordernissen des jeweils höchsten Druckes in der ersten oder zweiten Stellvorrichtung einstellt. In diesem Falle benötigt man noch zwei Steuerleitungen, die den jeweiligen Arbeitsdruck Cer beiden Stellvorrichtungen abfühlen und auf das Hubelement Cer Verstellpumpe leiten. Die Abstimmung der bekannter. Steuereinrichtung erfolgte im Hinblick auf die Kombination mit hydrostatischen Lenkungen. Solche Lenkungen haben keine feste Gestängeverbindung zu den Antriebsrädern. Als Lenkung ist eine durch ein Lenkhandrad betätigbare Dosierpumpe vorgesehen, die den Arbeitsstrom je nach Drehrichtung über Hochdruckleitungen der einen oder anderen Druckkammer des Lenkmotors zuleitet. Ein mit einer solchen Lenkung ausgerüstetes Fahrzeug läßt sich z. B. auf Baustellen und in der Landwirtschaft einsetzen, wobei die Höchstgeschwindigkeit durch den Gesetzgeber aus Sicherheitsgründen auf 50 km/h beschränkt ist.

Ausgehend von den beschriebenen Anordnungen ist es Aufgabe der Erfindung, in der Steuereinrichtung anstelle einer hydrostatischen Lenkung eine hydraulische Hilfskraftlenkung vorzusehen.

Diese Aufgabe ist durch die Merkmale der Ansprüche 1 bis 3 gelöst.

Nach der Erfindung besteht die erste Stellvorrichtung aus einer Hydrolenkung mit einer mechanischen Verbindung zwischen dem Lenkhandrad und den gelenkten Rädern. Das Lenkventil zum Ansteuern des Arbeitskolbens ist mit einem in eine Pilotstromleitung eingebauten Pilotventil gekoppelt, so daß sich Lenk- und Pilotventil beim Drehen des Lenkhandrades gemeinsam verstellen lassen. Das Pilotventil läßt in der Neutralstellung den Ölstrom in den Tank abströmen. Sobald man eine Lenkhandradbewegung einleitet, steuert man das Lenkventil aus, so daß eine Arbeitsstromleitung mit einer Druckseite des Lenkmotors in Verbindung kommt. Gleichzeitig regelt das Pilotventil über das Stromteilventil einen Druck in dieser Arbeitsstromleitung an. Durch die Verwendung eines mit dem Lenkventil gekoppelten Pilotventils ist es möglich, auch eine Hilfskraftlenkung (Gestängeverbindung zu den Rädern) über einen Pilotstrom anzuregeln. Ein Fahrzeug mit einer solchen Auslegung seiner hydraulischen Steuereinrichtung ist auch für schnellaufende Fahrzeuge mit Geschwindigkeiten oberhalb von 50 km/h zugelassen.

Die Steuereinrichtung läßt sich vorteilhaft mit einer Konstantpumpe oder einer Verstellpumpe betreiben. Bei Verwendung einer Verstellpumpe sind lediglich zwei zusätzliche Steuerleitungen mit Rückschlagventilen vorgesehen, die den Aufbau des Arbeitsdruckes in den beiden Stellvorrichtungen abgreifen und auf das Hubelement der Verstellpumpe leiten. Damit ist gesichert, daß die Verstellpumpe nur die augenblicklich benötigte Fördermenge bereitstellt. Auf diese Weise läßt sich Antriebsenergie einsparen.

Weitere Einzelheiten der Erfindung sind anhand der Zeichnung näher erläutert. Es zeigen

Fig. 1 ein Ölschema der von einer Konstantpumpe versorgten Steuereinrichtung mit einer Hilfskraftlenkung als erste Stellvorrichtung und einer Arbeitshydraulik als zweite Stellvorrichtung mit in der Neutralstellung dargestellten Steuerventilen.

Fig. 2 ein Ölschema nach Fig. 1, jedoch mit einer Verstellpumpe während einer Lenkbewegung.

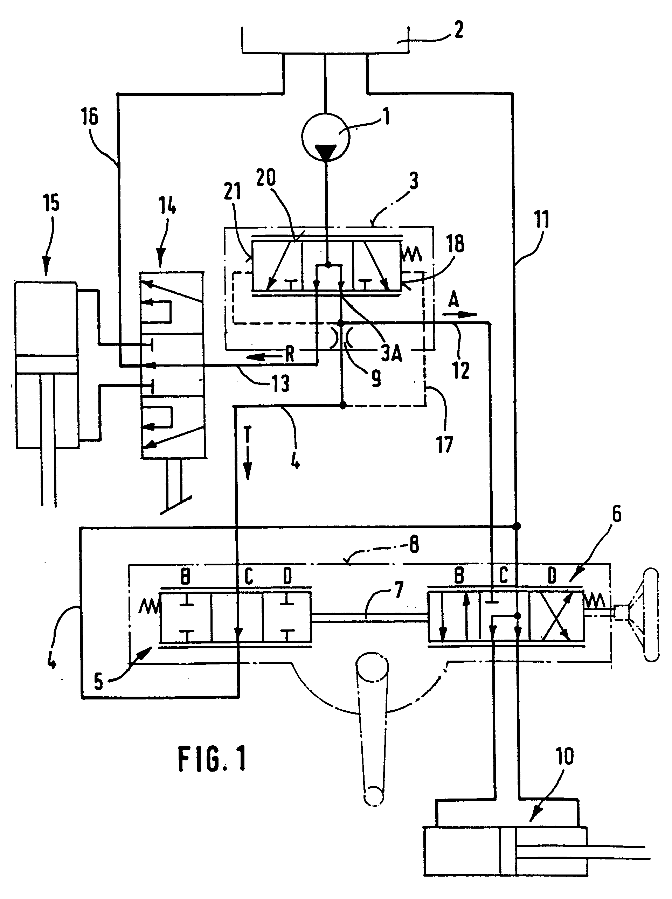

In der Steuereinrichtung nach Fig. 1 saugt eine Konstantpumpe 1 einen Ölstrom aus einem Behälter 2 an. Eine Antriebsmaschine treibt die Pumpe 1 an, die eine bestimmte Druckölmenge bereitstellt. An die Pumpe 1 ist ein Stromteilventil 3 mit Stellungen B, C und D angeschlossen. Unter den Stellungen B und D sind dabei Extremstellungen zu verstehen. Aus der Mittellage C heraus lassen sich je nach den Druckverhältnissen in beiden Richtungen beliebige Zwischenstellungen erreichen. Das Stromteilventil 3 hat die Aufgabe, den Ölstrom der Pumpe 1 auf einen kleinen Teilstrom T in einer Pilotstromleitung 4 zu begrenzen. Hierzu dient eine meßblende 9, die in Stromrichtung hinter einer Steuerkante 3A liegt. Nach der Erfindung führt die Pilotstromleitung 4 zu einem Pilotventil 5 mit den Stellungen B, C und D. Das Pilotventil 5 ist durch ein Verbindungsglied 7 mit einem Lenkventil 6 gekoppelt, so daß sich diese beiden Ventile 5 und 6 immer gleichzeitig in derselben Richtung aussteuern lassen. Das Lenkventil 6 hat gleichfalls Stellungen B, C und D und dient zum Ansteuern einer ersten Stellvorrichtung 10. Die Stellvorrichtung 10 kann außerhalb eines Lenkgehäuses B als separater Lenkmotor an der Lenkachse angebaut sein. Ebenso ist es möglich, die Stellvorrichtung 10 innerhalb des Lenkgehäuses B anzuordnen. Im letzteren Fall greift in einen Arbeitskolben eine in Kugeln gelagerte Gewindespindel ein. Der Arbeitskolben selbst trägt eine Verzahnung, die in ein mit einem Lenkstockhebel verbundenes Lenksegment eingreift. Die Bauweise einer solchen, auch als "Blocklenkung" bezeichneten Kugelmutter-Hydrolenkung läßt sich z. B. aus der DE-PS 29 13 484 entnehmen.

In der dargestellten Neutralstellung C verbindet das Pilotventil 5 die Pilotstromleitung 4 mit einer an den Behälter 2 angeschlossenen Rücklaufleitung 11. Das sich gleichfalls in der Stellung C befindliche Lenkventil 6, stellt eine Verbindung von der Rücklaufleitung 11 zu den beiden Druckräumen der Stellvorrichtung 10 her. Das Lenkventil 6 sperrt dabei einen vom Stromteilventil 3 abgehenden Stromzweig 12 für den Arbeitsstrom A der Stellvorrichtung 10 ab. Ein weiterer Stromzweig 13 für einen Reststrom R führt zu einem Betätigungsventil 14, welches eine zweite Stellvorrichtung 15 einer Hubhydraulik steuert. Auch das Betätigungsventil 14 steht in der Neutralstellung, in welcher es den Stromzweig 13 an eine Rücklaufleitung 16 anschließt.

Dreht der Fahrer am Lenkhandrad so, daß sich das Lenkventil 6 und das Pilotventil 5 in ihre Stellung B verschieben, so stellt das Lenkventil 6 allmählich eine Verbindung vom Stromzweig 12 zur linken Druckseite der Stellvorrichtung 10 her. Die rechte Druckseite erhält Verbindung mit der Rücklaufleitung 11 bzw. dem Behälter 2. Da gleichzeitig das Pilotventil 5 das Abströmen des Öls über die Pilotstromleitung 4 zum Behälter 2 immer stärker drosselt, regelt dieses in den Stromzweig 12 einen Druck an, der in der Lage ist, den Arbeitskolben der Stellvorrichtung 10 nach rechts zu verschieben. Je nach Höhe des in der Stellvorrichtung 10 angeforderten Druckes, der sich in Abhängigkeit von der Handkraft bzw. vom Grad der Aussteuerung der Ventile 5 und 6 einstellt, wirkt auch ein entsprechender Druck in der Pilotstromleitung 4. Dieser Druck überträgt sich über eine Steuerleitung 17 auf eine Federseite 18 des Stromteilventils 3, so daß dieses einen entsprechend größeren Steuerquerschnitt von der Pumpe 1 zum Stromzweig 12 freigibt. Die Vergrößerung des Steuerquerschnitts erfolgt durch die Verschiebung eines Ventilkolbens 20 des Stromteilventils 2 gegen die Druckkraft des Arbeitsdruckes A auf der linken Stirnseite 21 des Ventilkolbens 20.

Verstellt der Fahrer gleichzeitig während einer Lenkbewegung das Betätigungsventil 14 der zweiten Stellvorrichtung, so fließt dieser Stellvorrichtung als Reststrom R höchstens nur so viel Drucköl zu, wie der Maximalförderung der Pumpe 1, abzüglich des momentanen Arbeitsstromes A und des Teilstromes T, entspricht. Mit diesem Reststrom R muß die zweite Stellvorrichtung 15 auskommen, da das Stromteilventil 3 die Lenkeinrichtung immer bevorzugt versorgt. Dreht der Fahrer das Lenkhandrad langsamer, so ergibt sich auch ein geringerer Öldurchsatz zur Stellvorrichtung 10. Dadurch steigt wiederum der Reststrom R zur Stellvorrichtung 15 entsprechend an. In der Regel erfolgt die Lenkungsbetätigung bei verringerten Arbeitsströmen, so daß die zweite Stellvorrichtung 15 nur in extremen Betriebszuständen der Lenkeinrichtung mit einer verringerten Ölzufuhr auskommen muß. Weitere Hinweise zur Funktion des allgemein bekannten Stromteilventils lassen sich aus der eingangs angeführten DE-OS 35 40 236 entnehmen.

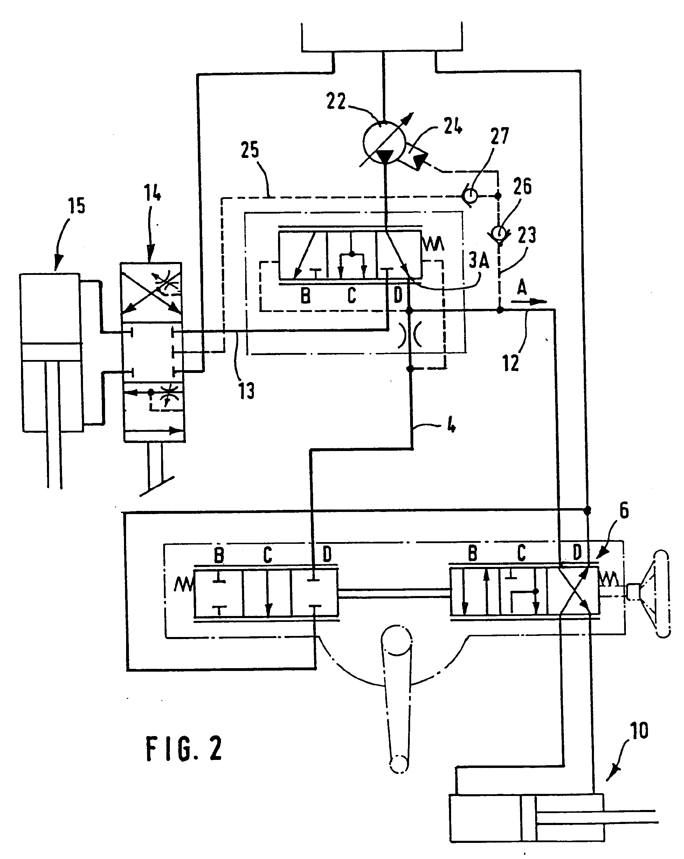

Die Ausführung nach Fig. 2 unterscheidet sich von Fig. 1 dadurch, daß man anstelle der Konstantpumpe 1 eine Verstellpumpe 22 vorsieht. Hier ist ein Hubelement 24 der Verstellpumpe 22 über eine Steuerleitung 23 an den den Arbeitsstrom A für die Lenkeinrichtung führenden Stromzweig 12 angeschlossen. Der in der Stellung C (Neutral) des Lenkventils 6 vor der Steuerkante 3A durch Anstau des Drucköls erzeugte Differenzdruck beträgt ca. 12 bis 15 bar und dient zur Regelung der Pumpe 22. Dieser Differenzdruck wirkt bei nicht betätigter zweiter Stellvorrichtung 15 auf die Pumpe 22 in Richtung Hubverkleinerung. Die Pumpe 22 stellt sich so ein, daß sie den Teilstrom T aufrechterhält. Die Steuerkante 3A gibt dabei einen verhältnismäßig kleinen Öffnungsquerschnitt frei.

In der gezeichneten Extremstellung D des Lenkventils 6 bei sehr schneller Lenkbewegung öffnet die Steuerkante 3A weit (Verschiebung des Ventilkolbens 20 des Stromteilventils 3 nach links), so daß die Druckdifferenz nahezu Null ist. Das Hubelement 24 der Pumpe 22 schwenkt dann in die maximale Förderstellung aus.

Das Hubelement 24 der Pumpe 22 wird über eine Steuerleitung 25 in gleicher Weise durch die zweite Stellvorrichtung 15 beeinflußt. Wie durch kleine Verstelldrosseln angedeutet, erzeugt hier das Betätigungsventil 14 den notwendigen Differenzdruck selbst. Die jeweilige Steuerstellung des Betätigungsventils 14 beeinflußt also die Fördermenge der Pumpe 22 mit.

In den beiden Steuerleitungen 23 und 25 befinden sich in Richtung zur Pumpe 22 öffnende Rückschlagventile 26 und 27. Dadurch ist gesichert, daß immer die Stelleinrichtung mit dem höheren Druck die Pumpe 22 auf den benötigten Ölbedarf einstellt.

Bezugszeichen

| | |
|---|---|
| 1 | Konstantpumpe |
| 2 | Behälter |
| 3 | Stromteilventil |
| 3A | Steuerkante |
| 4 | Pilotstromleitung |
| 5 | Pilotventil |
| 6 | Lenkventil |
| 7 | Verbindungsglied |
| 8 | Lenkgehäuse |
| 9 | Meßblende |
| 10 | Erste Stellvorrichtung |
| 11 | Rücklaufleitung |
| 12 | Stromzweig an 6 |
| 13 | Stromzweig an 14 |
| 14 | Betätigungsventil |
| 15 | Zweite Stellvorrichtung |
| 16 | Rücklaufleitung |
| 17 | Steuerleitung |
| 18 | Federseite von 3 |
| 19 | - |
| 20 | Ventilkolben |
| 21 | Stirnseite von 20 |
| 22 | Verstellpumpe |
| 23 | Steuerleitung |
| 24 | Hubelement |
| 25 | Steuerleitung |
| 26 | Rückschlagventil |
| 27 | Rückschlagventil |
| A | Arbeitsstrom |
| R | Reststrom |
| T | Teilstrom |

## Patentansprüche

1. Steuereinrichtung für zwei über je einen Stromzweig durch eine Hochdruckpumpe versorgte hydraulische Stellvorrichtungen mit folgenden Merkmalen:
   – Die erste Stellvorrichtung ist eine über ein Lenkventil versorgte Lenkeinrichtung für Kraftfahrzeuge;
   – das Lenkventil steht zum Betätigen mit einem Lenkhandrad in Verbindung;
   – zu dem Lenkventil führt von einem Stromteilventil ein Stromzweig für den Arbeitsstrom;
   – ein weiterer Stromzweig führt von dem Stromteilventil einen Arbeitsstrom über ein Betätigungsventil zu einer zweiten Stellvorrichtung;
   – vom Stromteilventil geht eine über eine Meßblende geführte Pilotstromleitung ab, die in Neutralstellung des Lenkventils an eine Rücklaufleitung angeschlossen ist und in einer Lenkstellung zum Anregeln eines Arbeitsdruckes dient,
   **gekennzeichnet** durch folgende Merkmale:
   – Die erste Stellvorrichtung enthält eine Hydrolenkung mit einer mechanischen Verbindung zwischen einem Lenkhandrad und den gelenkten Rädern;
   – in die Pilotstromleitung (4) ist ein Pilotventil (5) eingebaut;
   – das Lenkventil (6) zum Ansteuern des Arbeitskolbens ist mit dem Pilotventil (5) gekoppelt, so daß dieses zusammen mit dem Lenkventil (6) aussteuerbar ist.

2. Steuereinrichtung nach Anspruch 1, dadurch **gekennzeichnet**, daß zur Versorgung der beiden Stellvorrichtungen (10, 15) eine Konstantpumpe (1) vorgesehen ist (Fig. 1).

3. Steuereinrichtung nach Anspruch 1, **gekennzeichnet** durch folgende Merkmale:
   – Zur Versorgung der beiden Stellvorrichtungen (10, 15) ist eine Verstellpumpe (22) vorgesehen;
   – eine auf das Verstellelement der Verstellpumpe wirkende und ein Rückschlagventil (26) enthaltende

4

Steuerleitung (23) ist mit dem zum Lenkventil führenden Stromzweig (12) verbunden, und
– das Betätigungsventil (14) der zweiten Stellvorrichtung (15) stellt beim Auslenken eine Verbindung zwischen einer weiteren an die Verstellpumpe (22) angeschlossenen und ein Rückschlagventil (27) enthaltenden Steuerleitung (25) und dem anderen Stromzweig (13) her.

## Claims

1. Control system for two hydraulic actuating devices, which are supplied by a high-pressure pump each by way of a branch circuit, having the following features:
– the first actuating device is a motor vehicle steering device supplied by way of a steering valve;
– the steering valve is connected for actuation to a steering handwheel;
– a branch circuit for the working current leads from a current dividing valve to the steering valve;
– a further branch circuit carries a working current from the current dividing valve by way of an actuating valve to a second actuating device;
– going out from the current dividing valve and leading by way of an orifice gauge is a pilot flow line which, in the neutral position of the steering valve, is connected to a return line and, in a steering position, serves to build up a working pressure,
characterized by the following features:
– the first actuating device comprises a hydraulic steering gear having a mechanical connection between a steering handwheel and the steered wheels;
– a pilot valve (5) is incorporated into the pilot flow line (4);
– the steering valve (6) for activating the working piston is coupled to the pilot valve (5) so that the control setting of said pilot valve together with the steering valve (6) is adjustable.

2. Control system according to claim 1, characterized in that a fixed displacement pump (1) is provided for supplying the two actuating devices (10, 15) (Fig.1).

3. Control system according to claim 1, characterized by the following features:
– a variable displacement pump (22) is provided for supplying the two actuating devices (10, 15);
– a control line (23), which acts upon the adjusting element of the variable displacement pump and includes a check valve (26), is connected to the branch circuit (12) leading to the steering valve, and
– the actuating valve (14) of the second actuating device (15) upon deflection establishes a connection between a further control line (25), which is connected to the variable displacement pump (22) and includes a check valve (27), and the other branch circuit (13).

## Revendications

1. Agencement de commande pour deux dispositifs hydrauliques de manoeuvre alimentés chacun par un circuit de fluide au moyen d'une pompe à haute pression, présentant les caractéristiques suivantes :
– le premier dispositif de manoeuvre est un dispositif de direction pour véhicules automobiles, alimenté à travers une soupape de direction;
– ladite soupape est reliée à un volant manuel qui la commande;
– un circuit de fluide conduit un flux de travail d'une soupape de dérivation à la soupape de direction;
– un autre circuit de fluide conduit un flux de travail de la soupape de dérivation à un second dispositif de manoeuvre en traversant une soupape de commande;
– un conduit de pilotage, sortant de la soupape de dérivation à travers un étranglement réglable, est raccordé à un conduit de retour dans la position neutre de la soupape de direction et sert à régler une pression de travail dans une position de braquage de la direction,
**caractérisé** par les caractéristiques suivantes :
– le premier dispositif de manoeuvre comprend une direction hydraulique pourvue d'une liaison mécanique entre un volant manuel et les roues directrices;
– une soupape pilote (5) est montée dans le conduit de pilotage (4);
– la soupape de direction (6) est couplée à la soupape pilote (5) pour commander le vérin de direction, de sorte que la soupape pilote est commandée extérieurement en commun avec la soupape de direction (6).

2. Agencement selon la revendication 1, **caractérisé** en ce qu'une pompe à cylindrée constante (1) est prévue pour alimenter les deux dispositifs de manoeuvre (10, 15) (Fig. 1).

3. Agencement selon la revendication 1, **caractérisé** par les caractéristiques suivantes :
– une pompe réglable (22) est prévue pour alimenter les deux dispositifs de manoeuvre (10, 15);

– un conduit de commande (23) agissant sur l'élément réglable de la pompe réglable et comportant un clapet anti-retour (26) est raccordé au circuit (12) conduisant à la soupape de direction, et
– la soupape de commande (14) du second dispositif de manoeuvre (15) établit, par son actionnement, une liaison entre ledit autre circuit de fluide (13) et un autre conduit de commande (25) raccordé à la pompe réglable (22) et comportant un clapet anti-retour (27).

**FIG. 1**

FIG. 2